# EUROPEAN PATENT APPLICATION

(11) **EP 4 611 378 A1**
(43) Date of publication of application: **03.09.2025**
(21) Application number: 23881480.0
(22) Date of filing: 07.09.2023
(51) Int. Cl.: H04N 21/482, H04N 21/431, H04N 21/485

(54) **VIDEO PROCESSING METHOD, APPARATUS AND DEVICE, AND STORAGE MEDIUM**

(30) Priority: 27.10.2022 CN 202211329267
(71) Applicant: Beijing Zitiao Network Technology Co., Ltd., Beijing 100190 (CN)
(72) Inventor: ZUO, Dongdong, Beijing 100028 (CN); LIU, Jun, Beijing 100028 (CN)
(74) Representative: Marks & Clerk LLP
(86) International application number: PCT/CN2023/117473
(87) International publication number: WO 2024/087899

(57) **Abstract**

Provided in the present disclosure are a video processing method, apparatus and device, and a storage medium. The method comprises: in response to a preset pinching operation acting on a video playing page, skipping from the video playing page to a video list page, wherein the video playing page corresponds to at least one video classification tag, each video classification tag corresponds to a video stream, and videos in a first video stream corresponding to a first video classification tag are presented on the video playing page in the form of a single column; and presenting videos in a second video stream on the video list page in the form of double columns, wherein the second video stream is different from video streams respectively corresponding to the video classification tags. According to the present disclosure, the function of switching from a first video stream presented on a video playing page to a second video stream presented on a video list page is provided by means of a preset pinching operation acting on the video playing page; and videos in the second video stream can also be presented in the form of double columns, thereby enriching a video-based interaction function, and improving the user experience.

## Description

This application claims priority to Chinese Patent Application No. 202211329267.6, filed on October 27, 2022, the entire disclosure of which is incorporated herein by reference as part of the present disclosure.

### TECHNICAL FIELD

The present disclosure relates to a video processing method, an apparatus, a device, and a storage medium.

### BACKGROUND

With the continuous development of the video processing technology, people have increasingly diversified requirements on video related functions. Therefore, how to enrich video related functions to meet more requirements of users for enhancing user experience is the technical problem to be urgently solved at present.

### SUMMARY

In order to solve the above problem, the present disclosure provides a video processing method, an apparatus, a device, and a storage medium, which can enrich interactive functions based on videos and enhance the user experience.

On the first aspect, the present disclosure provides a video processing method, including: in response to a preset pinching operation on a video playing page, jumping from the video playing page to a video list page, wherein the video playing page corresponds to at least one video classification tab; each video classification tab has a corresponding video stream; videos in a first video stream are shown in a form of a single column on the video playing page, and the first video stream corresponds to a first video classification tab of the at least one video classification tab; and showing videos in a second video stream in a form of two columns on the video list page, wherein the second video stream is different from a video stream corresponding to the at least one video classification tab.

In an optional implementation, the method further comprises: in response to a preset triggering operation on the video list page, jumping from the video list page to the video playing page.

In an optional implementation, the method further comprises: in response to a preset sliding operation on the video list page, showing, by sliding, the videos shown in the form of two columns on the video list page.

In an optional implementation, the method further comprises: in response to a triggering operation for a target video of the videos on the video list page, jumping from the video list page to a second video stream playing page; and playing the target video on the second video stream playing page.

In an optional implementation, the method further comprises: in response to a video switching operation on the second video stream playing page, determining a target switching video based on the second video stream; and playing the target switching video on the second video stream playing page.

In an optional implementation, the method further comprises: in response to a triggering operation within a search box on the video list page, jumping from the video list page to a video searching page, wherein the video searching page is configured to search for a video according to a search keyword.

In an optional implementation, a search keyword corresponding a currently playing video on the video playing page is displayed within the search box; the video processing method further comprises: in response to a triggering operation for a preset search control on the video list page, searching for a video according to the search keyword corresponding the currently playing video on the video playing page.

In an optional implementation, the method further comprises: according to a sequential relationship corresponding to showing positions of the videos in the second video stream on the video list page, sequentially playing preview videos of the videos on the video list page, wherein the preview videos are video clips of the videos.

On the second aspect, the present disclosure provides a video processing apparatus, and the apparatus comprises: a first jumping module configured to, in response to a preset pinching operation on a video playing page, jump from the video playing page to a video list page, wherein the video playing page corresponds to at least one video classification tab; each video classification tab has a corresponding video stream; videos in a first video stream are shown in a form of a single column on the video playing page, and the first video stream corresponds to a first video classification tab of the at least one video classification tab; and a first showing module configured to show videos in a second video stream in a form of two columns on the video list page, wherein the second video stream is different from a video stream corresponding to the at least one video classification tab.

On the third aspect, the present disclosure provides a computer-readable storage medium storing instructions, and the instructions, when run on a terminal device, cause the terminal device to implement the above video processing method.

On the fourth aspect, the present disclosure provides a video processing device, comprising a memory, a processor, and a computer program stored on the memory and capable of running on the processor, wherein the processor, when executing the computer program, implements the video processing method according to any one of claims 1 to 8.

On the fifth aspect, the present disclosure provides a computer program product, including a computer program/instructions which, when executed by a processor, cause/causes the above video processing method.

### BRIEF DESCRIPTION OF DRAWINGS

The accompanying drawings incorporated into the specification and constituting part of the specification illustrate the examples of the present disclosure, and serve, together with the specification, to explain the principles of the present disclosure.

In order to describe embodiments of the present disclosure more clearly, the accompanying drawings required for describing the embodiments will be described briefly below. Apparently, other accompanying drawings can also be derived from these drawings by those of ordinary skill in the art without creative efforts.
Fig. 1 is a flowchart of a video processing method provided in an embodiment of the present disclosure;
Fig. 2 is a schematic diagram of a video playing page provided in an embodiment of the present disclosure;
Fig. 3 is a schematic diagram of a video list page provided in an embodiment of the present disclosure;
Fig. 4 is a schematic diagram of a second video stream playing page provided in an embodiment of the present disclosure;
Fig. 5 is a structural schematic diagram of a video processing apparatus provided in an embodiment of the present disclosure; and
Fig. 6 is a structural schematic diagram of a video processing device provided in an embodiment of the present disclosure.

### DETAILED DESCRIPTION

In order to provide a clearer understanding of the objectives, features and advantages of the present disclosure, the solutions in the present disclosure will be further described below. It should be noted that the embodiments in the present disclosure and features in the embodiments may be combined with one another without conflict.

Many specific details are described below to help fully understand the present disclosure. However, the present disclosure may also be implemented in other manners different from those described herein. Apparently, the described examples are merely some rather than all of the examples of the present disclosure.

With the continuous development of the video processing technology, people have increasingly diversified requirements on video related functions. Therefore, how to enrich video related functions to meet more requirements of users for enhancing user experience is the technical problem to be urgently solved at present.

In view of the above, an embodiment of the present disclosure provides a video processing method. Firstly, in response to a preset pinching operation on a video playing page, jumping from the video playing page to a video list page is performed, wherein the video playing page corresponds to at least one video classification tab; each video classification tab has a corresponding video stream; and videos in a first video stream corresponding to a first video classification tab are shown in the form of a single column on the video playing page; and videos in a second video stream are shown in the form of two columns on the video list page, wherein the second video stream is different from a video stream corresponding to each video classification tab. As can be seen, the embodiments of the present disclosure can provide a function of switching the first video stream shown on the video playing page to the second video stream shown on the video list page for a user by the preset pinching operation on the video playing page. In addition, the videos in the second video stream can be further shown in the form of two columns. Thus, interactive functions based on videos are enriched, and the experience of the user is enhanced.

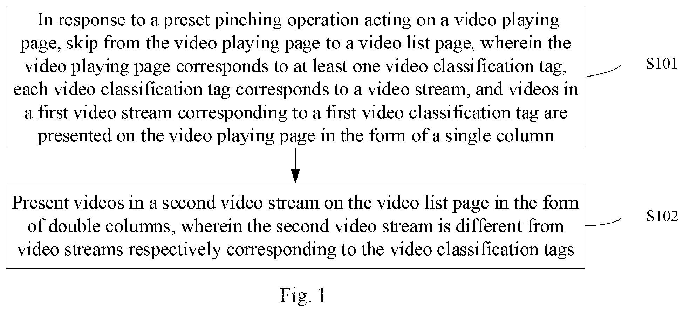

On the basis, an embodiment of the present disclosure provides a video processing method. With reference to Fig. 1, there is shown a flowchart of a video processing method provided in an embodiment of the present disclosure. The video processing method includes the following steps.

At S101, in response to a preset pinching operation on a video playing page, jumping from the video playing page to a video list page is performed.

The video playing page corresponds to at least one video classification tab; each video classification tab has a corresponding video stream; videos in a first video stream are shown in the form of a single column on the video playing page, and the first video stream corresponds to a first video classification tab of the at least one video classification tab.

The video processing method provided in the embodiments of the present disclosure may be applied to a client. For example, the client may include a client deployed at a smart phone, a client deployed at a tablet computer, and the like.

In the embodiments of the present disclosure, the video playing page corresponds to at least one video classification tab, wherein the video classification tab may include a movie Tab, a travel Tab, a pet Tab, and the like. Each video classification tab has a corresponding video stream. For example, the movie Tab has a corresponding movie related video stream. The pet Tab has a corresponding pet related video stream. By switching between different video classification tabs, the purpose of showing videos in a video stream corresponding to a video classification tab after switching on the video playing page can be achieved.

The first video classification tab in the embodiments of the present disclosure may be any video classification tab of the at least one video classification tab corresponding to the video playing page. In practical use, in the process of showing the videos in the video stream corresponding to any video classification tab in the form of a single column on the video playing page, a user may trigger jumping from the video playing page to the video list page by the preset pinching operation on the video playing page.

**In** the embodiments of the present disclosure, the first video stream may be any video stream corresponding to the first video classification tab.

**In** an optional implementation, by a slide-up or slide-down operation on the video playing page, switching to play the videos in the first video stream can be performed, and the effect of showing the videos in the first video stream in the form of a single column is achieved.

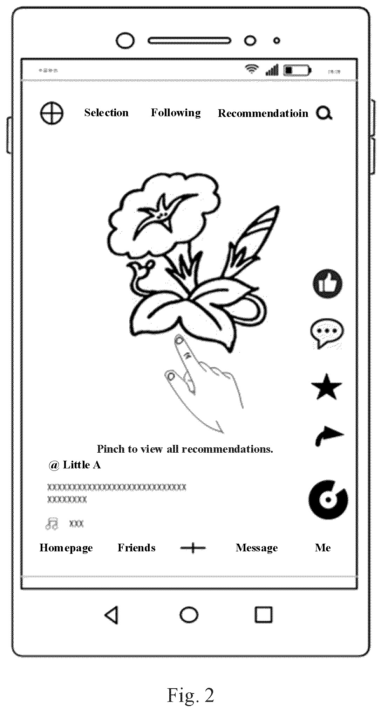

As shown in Fig. 2, there is shown a schematic diagram of a video playing page provided in an embodiment of the present disclosure. **In** response to the preset pinching operation on the video playing page, jumping from the video playing page to the video list page is performed.

In the embodiments of the present disclosure, the preset pinching operation on the video playing page may include a multi-finger pinching operation triggered on the video playing page and the like to trigger jumping from the video playing page to the video list page. The multi-finger pinching operation may include a two-finger pinching operation, a three-finger pinching operation, and the like.

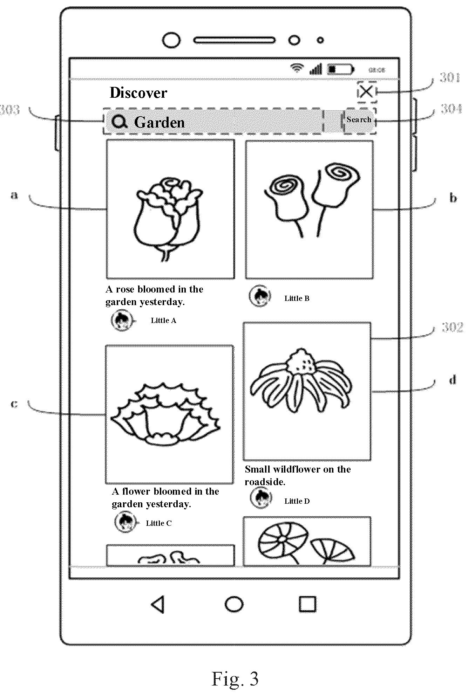

As shown in Fig. 2, upon receiving the preset pinching operation on the video playing page, jumping from the video playing page to the video list page is performed. As shown in Fig. 3, there is shown a schematic diagram of a video list page provided in an embodiment of the present disclosure. In the embodiment of the present disclosure, jumping from the video playing page to the video list page is triggered by the preset pinching operation on the video playing page. The interactive functions based on videos are enriched, and the experience of the user is enhanced.

In an optional implementation, a preset pinching operation prompt message may be further displayed on the video playing page, which may specifically include a pinch gesture animation prompt, a pinch text prompt, and the like. Specifically, a text prompt "pinch to view all recommendations" may be displayed on the video playing page to guide the user to trigger jumping from the video playing page to the video list page by the preset pinching operation on the video playing page. The interactive experience of the user is further enhanced.

In practical use, after jumping to the video list page, if the user wants to return to the video playing page, the user may return to the video playing page by a preset triggering operation on the video list page, and the videos in the first video stream are then shown continuously on the video playing page.

In the embodiments of the present disclosure, the preset triggering operation on the video list page may include particular operations such as a multi-finger magnifying operation and a slide-right operation on the video list page to trigger the function of jumping from the video list page back to the video playing page. The multi-finger magnifying operation may include a two-finger magnifying operation, a three-finger magnifying operation, and the like.

In addition, a close control may be set on the video list page. By tapping on the close control, returning to the video playing page may also be triggered. As shown in Fig. 3, upon receiving a tapping operation performed by the user on the close control 301 of the video list page, returning to the video playing page is performed, and a video in the first video stream is then played continuously on the video playing page.

At S102, videos in a second video stream are shown in the form of two columns on the video list page.

The second video stream is different from a video stream corresponding to the at least one video classification tab.

In the embodiments of the present disclosure, the at least one video classification tab corresponding to the video playing page respectively has a corresponding video stream, and the second video stream is different from each video stream described above.

In an optional implementation, the videos in the second video stream may be determined based on a preset recommendation strategy. The preset recommendation strategy may be preset based on a business requirement, which will not be defined in the embodiments of the present disclosure.

In an optional implementation, the preset recommendation strategy may be determining the videos in the second video stream in at least one of a plurality of dimensions such as a feature dimension of a current user, a feature dimension of a currently playing video on the video playing page, and a video clout dimension.

In an optional implementation, the videos in the second video stream may be videos determined from video resources of a server based on a feature such as a content tab of the currently playing video. For example, assuming that the content tab of the currently playing video includes "flower", the videos in the second video stream may include a preset number of videos having the "flower" content tab.

In another optional implementation, the videos in the second video stream may also include a preset number of videos having the highest clout within a recent period of time from the video resources of the server. The highest clout may be, for example, the highest view count.

In yet another optional implementation, the videos in the second video stream may also include videos determined from the video resources of the server based on a user tab of the current user and the like. For example, assuming that the user tab of the current user is "outdoor enthusiasts", the videos in the second video stream may include a preset number of outdoor sport related videos.

In the embodiments of the present disclosure, for the convenience of showing the videos in the second video stream, after jumping from the video playing page to the video list page, the videos in the second video stream may be shown in the form of two columns on the video list page, as shown in Fig. 3.

Specifically, the video list page shows each of covers of the videos in the second video stream in the form of two columns. A cover of a video may be tapped to trigger entering a playing page of the video corresponding to the cover.

In the embodiments of the present disclosure, in order to help the user to understand of the contents of the videos shown in the form of two columns, the preview video of each video on the video list page may be sequentially played according to a sequential relationship corresponding to showing positions of the videos in the second video stream on the video list page.

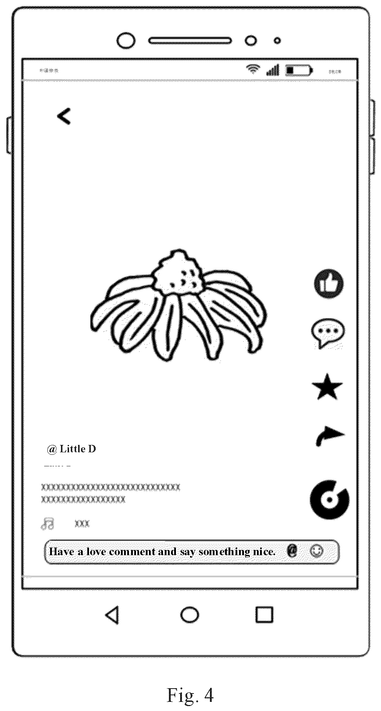

As shown in Fig. 3, 4 videos in the second video stream are shown on the video list page. Assuming that the showing positions of the 4 videos are represented as a, b, c, and d, respectively, the preview videos of the videos are sequentially played on the video list page according to the sequential relationship of a, b, c, and d so that the user can know the content shown in the corresponding video through the preview video.

In the embodiments of the present disclosure, the preview video may be a video clip of a video. For example, the preview video may be consecutive multiple video pictures. For example, a video clip of a video with a high view count may be used as the preview video of the video, etc. The user may trigger viewing the corresponding video based on the preview video. Thus, the use experience of the user is enhanced.

In practical use, a preset sliding operation may be performed on the video list page to show the videos shown in the form of two columns on the video list page by sliding, so that the user can select a video to be played according to a requirement. The preset sliding operation may include a slide-up operation or a slide-down operation, etc.

In an optional implementation, due to a finite number of the videos in the second video stream, when it is detected that the last video is shown by sliding on the video list page, a prompt message may be shown at the bottom of the video list page to prompt the user that no more videos exist at present.

In the video processing method provided in the embodiments of the present disclosure, firstly, jumping from the video playing page to the video list page is performed in response to the preset pinching operation on the video playing page, wherein the video playing page corresponds to at least one video classification tab; each video classification tab has the corresponding video stream; and the videos in the first video stream are shown in the form of a single column on the video playing page, and the first video stream corresponds to a first video classification tab of the at least one video classification tab. The videos in the second video stream are then shown in the form of two columns on the video list page, wherein the second video stream is different from the video stream corresponding to each video classification tab. As can be seen, the embodiments of the present disclosure can provide a function of switching the first video stream shown on the video playing page to the second video stream shown on the video list page for a user by the preset pinching operation on the video playing page. **In** addition, the videos in the second video stream can be further shown in the form of two columns. Thus, interactive functions based on videos are enriched, and the experience of the user is enhanced.

In practical use, in the process of showing the videos on the video list page by sliding, a triggering operation may be performed on a target video of the videos on the video list page to jump from the video list page to a second video stream playing page, and to play the target video on the second video stream playing page.

In the embodiments of the present disclosure, the target video may be any video shown on the video list page.

In the embodiments of the present disclosure, the triggering operation for the target video of the videos on the video list page may include a tapping operation for the preview video of the target video, or may also include a long-press operation for the preview video of the target video, etc., for achieving the effect of triggering entering the second video stream playing page.

As shown in Fig. 3, upon receiving the tapping operation on the preview video of the target video 302, entering the second video stream playing page from the video list page is performed. As shown in Fig. 4, there is shown a schematic diagram of a second video stream playing page provided in an embodiment of the present disclosure, and the target video 302 is played on the second video stream playing page.

In the process of playing the target video, the user may also determine and play a target switching video by a video switching operation on the second video stream playing page based on the second video stream to which the target video belongs, in order to further enrich the interactive functions based on videos and enhancing the experience of the user.

In the embodiments of the present disclosure, the video switching operation on the second video stream playing page may include a slide-up or slide-down operation on the second video stream playing page, etc., for realizing the function of switching videos.

In the embodiments of the present disclosure, upon receiving the video switching operation on the second video stream playing page, firstly, the target switching video is determined based on the second video stream. Specifically, an adjacent video before or after the target video in the second video stream is determined as the target switching video based on the slide-up or slide-down operation triggered by the user, and the target switching video is then played on the second video stream playing page.

In an optional implementation, upon receiving the video switching operation on the second video stream playing page, if the target switching video is determined as the last video in the second video stream, the user may be prompted that the videos in the second video stream have been viewed complete, and the user is guided to return to the video list page.

As can be seen, the embodiments of the present disclosure may also realize jumping from the video list page to the second video stream playing page by the triggering operation for the target video of the videos in the video list page and realize playing of the target video on the second video stream playing page. The interactive functions in the video playing process are further enriched, and the experience of the user is enhanced.

On the basis of the above embodiments, in order to further enrich the interactive functions in the video playing process, a search box may also be set on the video list page, and jumping from the video list page to a video searching page is performed by a triggering operation within the search box on the video list page, wherein the video searching page is configured to search for a video according to a search keyword.

In the embodiments of the present disclosure, the triggering operation within the search box on the video list page may include a tapping operation within the search box on the video list page and the like, for triggering the effect of jumping to the video searching page.

As shown in Fig. 3, upon receiving the tapping operation within the search box 303 on the video list page, jumping from the video list page to the video searching page is performed. On the video searching page, a video is searched for based on a search keyword, wherein the search keyword may be a content input by the user in the search box on the video searching page.

In an optional implementation, after jumping from the video playing page to the video list page by the preset pinching operation on the video playing page, a search keyword corresponding to a currently playing video may also be displayed within the search box on the video list page.

In the embodiments of the present disclosure, the search keyword corresponding to the currently playing video may be a keyword related to the video content of the currently playing video. For example, assuming that the currently playing video is a video related to Spring Festival, the search keyword corresponding to the currently playing video may include contents such as "Spring Festival", "blessing", and "red packet". For another example, assuming that the currently playing video belongs to a certain activity or a certain hot event, the search keyword corresponding to the currently playing video may include a name of the activity, a topic of the hot event, and the like.

In the embodiments of the present disclosure, on the video list page on which the search keyword corresponding to the currently playing video is displayed, a preset search control may also be set. By a triggering operation on a preset search control of the video list page, a video may be searched for according to the search keyword corresponding to the currently playing video. The triggering operation on the preset search control of the video list page may include a tapping operation on the preset search control on the video list page and the like.

As shown in Fig. 3, the search keyword corresponding to the currently playing video, e.g., "garden", is displayed within the search box 303. Upon receiving the tapping operation on the preset search control 304, jumping from the video list page to a video searching result page is performed. A searching result video corresponding to the keyword "garden" is shown on the video searching result page based on the keyword "garden" corresponding to the first video.

In the embodiments of the present disclosure, by the triggering operation within the search box on the video list page, the function of jumping from the video list page to the video searching page is realized. In addition, a video can be searched for according to the input search keyword on the video searching page. As can be seen, the embodiments of the present disclosure can further enrich the interactive functions in the video playing process and further enhance the experience of the user.

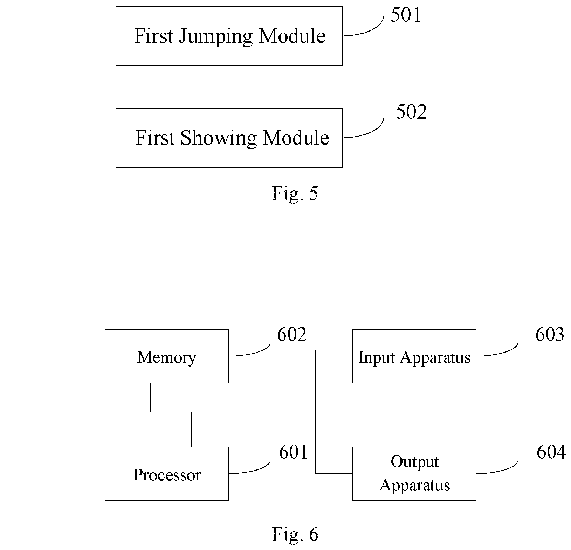

Based on the above method embodiments, the present disclosure further provides a video processing apparatus. With reference to Fig. 5, there is shown a structural schematic diagram of a video processing apparatus provided in an embodiment of the present disclosure. The video processing apparatus includes:

a first jumping module 501 configured to, in response to a preset pinching operation on a video playing page, jump from the video playing page to a video list page, wherein the video playing page corresponds to at least one video classification tab; each video classification tab has a corresponding video stream; and videos in a first video stream are shown in the form of a single column on the video playing page, and the first video stream corresponds to a first video classification tab of the at least one video classification tab; and

a first showing module 502 configured to show videos in a second video stream in the form of two columns on the video list page, wherein the second video stream is different from a video stream corresponding to the at least one video classification tab.

In an optional implementation, the video processing apparatus further includes: a second jumping module configured to, in response to a preset triggering operation on the video list page, jump from the video list page to the video playing page.

In an optional implementation, the video processing apparatus further includes: a second showing module configured to, in response to a preset sliding operation on the video list page, show, by sliding, the videos shown in the form of two columns on the video list page.

In an optional implementation, the video processing apparatus further includes: a third jumping module configured to, in response to a triggering operation for a target video of the videos on the video list page, jump from the video list page to a second video stream playing page; and a second playing module configured to play the target video on the second video stream playing page.

In an optional implementation, the video processing apparatus further includes: a determination module configured to, in response to a video switching operation on the second video stream playing page, determine a target switching video based on the second video stream; and a third playing module configured to play the target switching video on the second video stream playing page.

In an optional implementation, the video processing apparatus further includes: a fourth jumping module configured to, in response to a triggering operation within a search box on the video list page, jump from the video list page to a video searching page, wherein the video searching page is configured to search for a video according to a search keyword.

In an optional implementation, a search keyword corresponding a currently playing video on the video playing page is displayed within the search box; and the video processing apparatus further includes: a search module configured to, in response to a triggering operation for a preset search control on the video list page, search for a video according to the search keyword corresponding the currently playing video on the video playing page.

In an optional implementation, the video processing apparatus further includes: a fourth playing module configured to, according to a sequential relationship corresponding to showing positions of the videos in the second video stream on the video list page, sequentially play preview videos of the videos on the video list page, wherein the preview videos are video clips of the videos.

In the video processing apparatus provided in the embodiments of the present disclosure, firstly, in response to a preset pinching operation on a video playing page, jumping from the video playing page to a video list page is performed, wherein the video playing page corresponds to at least one video classification tab; each video classification tab has a corresponding video stream; and videos in a first video stream corresponding to a first video classification tab are shown in the form of a single column on the video playing page; and videos in a second video stream are then shown in the form of two columns on the video list page, wherein the second video stream is different from a video stream corresponding to each video classification tab. As can be seen, the embodiments of the present disclosure can provide a function of switching the first video stream shown on the video playing page to the second video stream shown on the video list page for a user by the preset pinching operation on the video playing page. **In** addition, the videos in the second video stream can be further shown in the form of two columns. Thus, interactive functions based on videos are enriched, and the experience of the user is enhanced.

In addition to the above video processing method and apparatus, an embodiment of the present disclosure further provides a computer-readable storage medium, where instructions are stored on the computer-readable storage medium, and when run on a terminal device, cause the terminal device to implement the video processing method described in the embodiments of the present disclosure.

An embodiment of the present disclosure further provides a computer program product, including a computer program/instructions which, when executed by a processor, cause/causes the video processing method described in the embodiments of the present disclosure to be implemented.

In addition, an embodiment of the present disclosure further provides a video processing device, as shown in Fig. 6, which may include: a processor 601, a memory 602, an input apparatus 603, and an output apparatus 604. The number of processors 601 in the video processing device may be one or more. One processor is shown in Fig. 6 for example. In some embodiments of the present disclosure, the processor 601, the memory 602, the input apparatus 603, and the output apparatus 604 may be connected by a bus or in other manners, where connection by the bus is shown in Fig. 6 for example.

The memory 602 may be configured to store software programs and modules. The processor 601 executes various functional applications and data processing of the video processing device by running the software programs and the modules stored on the memory 602. The memory 602 may mainly include a program storage area and a data storage area, where the program storage area may store an operating system, an application required by at least one function, etc. Moreover, the memory 602 may include a high-speed random access memory, and may also include a non-volatile memory, for example, at least one magnetic disk storage device, a flash memory device, or other volatile solid storage device. The input apparatus 603 may be configured to receive input digit or character information and generate signal inputs related to user settings and function control of the image processing device.

Specifically, in the present embodiment, the processor 601 may load executable files corresponding to processes of one or more applications to the memory 602 according to instructions, and the processor 601 may run the applications stored on the memory 602, thereby realizing various functions of the video processing device.

It should be noted that relational terms herein such as "first" and "second" are merely used to distinguish one entity or operation from another entity or operation without necessarily requiring or implying any actual such relationship or order between such entities or operations. In addition, terms "include", "comprise", or any other variations thereof are intended to cover a non-exclusive inclusion, so that a process, a method, an article, or a device including a series of elements not only includes those elements, but also includes other elements that are not explicitly listed, or also includes inherent elements of the process, the method, the article, or the device. Without more restrictions, the elements defined by the sentence "including a ..." do not exclude the existence of other identical elements in the process, method, article, or device including the elements.

The foregoing are descriptions of specific embodiments of the present disclosure, allowing a person skilled in the art to understand or implement the present disclosure. A plurality of amendments to are apparent to those skilled in the art, and general principles defined herein can be achieved in the other examples without departing from the spirit or scope of the present disclosure. Thus, the present disclosure will not be limited to these examples shown herein, but shall accord with the widest scope consistent with the principles and novel characteristics disclosed herein.

## Claims

1. A video processing method, comprising:
in response to a preset pinching operation on a video playing page, jumping from the video playing page to a video list page, wherein the video playing page corresponds to at least one video classification tab; each video classification tab has a corresponding video stream; videos in a first video stream are shown in a form of a single column on the video playing page, and the first video stream corresponds to a first video classification tab of the at least one video classification tab; and
showing videos in a second video stream in a form of two columns on the video list page, wherein the second video stream is different from a video stream corresponding to the at least one video classification tab.

2. The video processing method according to claim 1, further comprising:
in response to a preset triggering operation on the video list page, jumping from the video list page to the video playing page.

3. The video processing method according to claim 1 or 2, further comprising:
in response to a preset sliding operation on the video list page, showing, by sliding, the videos shown in the form of two columns on the video list page.

4. The video processing method according to any one of claims 1 to 3, further comprising:
in response to a triggering operation for a target video of the videos on the video list page, jumping from the video list page to a second video stream playing page; and
playing the target video on the second video stream playing page.

5. The video processing method according to claim 4, further comprising:
in response to a video switching operation on the second video stream playing page, determining a target switching video based on the second video stream; and
playing the target switching video on the second video stream playing page.

6. The video processing method according to any one of claims 1 to 5, further comprising:
in response to a triggering operation within a search box on the video list page, jumping from the video list page to a video searching page, wherein the video searching page is configured to search for a video according to a search keyword.

7. The video processing method according to claim 6, wherein a search keyword corresponding a currently playing video on the video playing page is displayed within the search box; the video processing method further comprises:
in response to a triggering operation for a preset search control on the video list page, searching for a video according to the search keyword corresponding the currently playing video on the video playing page.

8. The video processing method according to any one of claims 1 to 7, further comprising:
according to a sequential relationship corresponding to showing positions of the videos in the second video stream on the video list page, sequentially playing preview videos of the videos on the video list page, wherein the preview videos are video clips of the videos.

9. A video processing apparatus, comprising:
a first jumping module configured to, in response to a preset pinching operation on a video playing page, jump from the video playing page to a video list page, wherein the video playing page corresponds to at least one video classification tab; each video classification tab has a corresponding video stream; videos in a first video stream are shown in a form of a single column on the video playing page, and the first video stream corresponds to a first video classification tab of the at least one video classification tab; and
a first showing module configured to show videos in a second video stream in a form of two columns on the video list page, wherein the second video stream is different from a video stream corresponding to the at least one video classification tab.

10. A computer-readable storage medium storing instructions, wherein the instructions, when run on a terminal device, cause the terminal device to implement the video processing method according to any one of claims 1 to 8.

11. A video processing device, comprising a memory, a processor, and a computer program stored on the memory and capable of running on the processor, wherein the processor, when executing the computer program, implements the video processing method according to any one of claims 1 to 8.
